# EUROPÄISCHE PATENTSCHRIFT

(11) **EP 0 599 125 B1**
(45) Veröffentlichungstag und Bekanntmachung des Hinweises auf die Patenterteilung: **26.03.1997**
(21) Anmeldenummer: 93118120.0
(22) Anmeldetag: 09.11.1993
(51) Int. Cl.: F16F 15/26, F02B 67/06, F16H 1/22

(54) **Antrieb einer Ausgleichswelle an einer V-Brennkraftmaschine**
Driving arrangement for the balancing shaft of a V-type engine
Propulsion d'un arbre d'équilibrage d'un moteur en V

(30) Priorität: 12.11.1992 DE 4238148
(43) Veröffentlichungstag der Anmeldung: 01.06.1994
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Meurer, Josef, D-53844 Troisdorf (DE); Abts, Manfred, D-51519 Odenthal (DE); Metz, Hans, D-50259 Pulheim (DE)
(74) Vertreter: Messulam, Alec Moses

(56) Entgegenhaltungen:
- EP-A- 0 346 743
- WO-A-88/06233
- WO-A-89/02535
- DE-A- 2 822 589
- DE-C- 696 263
- DE-C- 704 851
- FR-A- 771 033
- FR-A- 1 273 127
- FR-A- 2 312 401
- US-A- 2 610 524
- US-A- 3 960 029
- US-A- 4 489 683

## Beschreibung

Die Erfindung bezieht sich auf einen Antrieb einer Ausgleichswelle an einer V-Brennkraftmaschine zum Ausgleich der Massenkräfte zweiter Ordnung, der im Oberbegriff des Patentanspruches 1 erläuterten Art.

Aus der US-PS 4,480,607 ist der Antrieb einer Ausgleichswelle an einer V-Brennkraftmaschine zum Ausgleich der Massenkräfte zweiter Ordnung bekannt, wobei es sich um einen V6- Verbrennungsmotor mit 90 Grad Winkel zwischen den Zylinderreihen handelt. Die Ausgleichswelle ist hierbei als eine sehr aufwendige Ausgleichswelle, kombiniert mit sogenannten Oldham-Kupplungen ausgebildet.

Aus der Beschreibungseinleitung dieser Schrift zum Stand der Technik ist zu entnehmen, daß es bei V-Brennkraftmaschinen bekannt ist, zum Ausgleich der Massenkräfte zweiter Ordnung eine Ausgleichswelle zu verwenden, die mit doppelter Kurbelwellendrehzahl jedoch gegenläufig angetrieben wird.

Aus der US-PS 4,617,885 ist der Antrieb einer Ausgleichswelle an, einer V-Brennkraftmaschine bekannt, die einen geringeren Winkel zwischen den Zylinderreihen als 90 Grad aufweist und die in besonderer Weise angeordnet und ausgebildet ist und nur mit Kurbelwellendrehzahl gegenläufig angetrieben wird.

Aus der DE-PS 28 22 589 ist bereits ein Antrieb einer gleichswellenanordnung für eine 4-Zylinder-Reihen-Brennkraftmaschine bekannt, bei der zwei Ausgleichswellen vorgesehen sind, von denen die eine mit doppelter Kurbelwellendrehzahl in Drehrichtung der Kurbelwelle und die andere mit gleicher Drehzahl entgegen der Drehrichtung der Kurbelwelle angetrieben wird. Die eine, über einen Zahnriemen angetriebene Ausgleichswelle treibt hierbei die konzentrisch hierzu angeordnete zweite Ausgleichswelle über ein Planetengetriebe mit einer Übersetzung von 1:1 an.

Aus der DE-OS 37 20 559 ist eine Einrichtung zum Ausgleich von Wechselmomenten bei einer Hubkolben-Kurbelwellenmaschine bekannt, die aus einer min einem konstanten Drehwinkelverhältnis gegenläufig zur Kurbelwelle rotierend angetriebenen Ausgleichsmasse besteht, wobei die Ausgleichsmasse selbst von einem Planetenradsatz gebildet wird, dessen Ringrad unmittelbar von der konzentrisch angeordneten Kurbelwelle angetrieben wird.

Die Aufgabe der Erfindung ist es, einen Antrieb nur einer Ausgleichswelle an einer V-Brennkraftmaschine zum Ausgleich der Massenkräfte zweiter Ordnung, der im Oberbegriff des Patentanspruches 1 erläuterten Art derart zu verbessern, daß die erforderliche Übersetzung der Drehzahl für die mit doppelter Kurbelwellendrehzahl gegenläufig anzutreibende Ausgleichswelle und die Drehrichtungsumkehr durch eine Getriebeeinheit erfolgen kann, die wenig Bauraum beansprucht und eine möglichst große Laufruhe aufweist.

Gemäß der Erfindung wird diese Aufgabe gelöst, indem bei einem Antrieb einer Ausgleichswelle an einer V-Brennkraftmaschine zum Ausgleich der Massenkräfte zweiter Ordnung, der im Oberbegriff des Patentanspruches 1 erläuterten Art, die im Kennzeichenteil des Patentanspruches 1 aufgezeigten Merkmale angewendet werden.

Dadurch, daß die Ausgleichswelle ein Sonnenrad aufweist, das in Eingriff mit zumindest drei auf einem Planetenträger angeordneten Planetenrädern steht, der Planetenradträger am Zylinderblock festgelegt ist, die Planetenräder mit einem Ringrad in Eingriff stehen, das über ein äußeres Ketten- oder Zahnriemenrad über einen Ketten- oder Zahnriementrieb von der Kurbelwelle mit einer ersten Übersetzung von z.B. 1:1 angetrieben wird und eine zweite Übersetzung zwischen Ringrad und Sonnenrad, z.B. 2:1 beträgt, wird durch die Getriebebaueinheit sowohl die Drehrichtungsumkehr als auch die Drehzahlerhöhung von 1:2 erreicht, wobei die gekapselt ausgeführte Getriebeeinheit den Vorteil aufweist, daß sie eine große Laufruhe aufweist und durch die Integration in ein eigenes Ausgleichswellengehäuse, das über Schraubenbolzen am Zylinderblock befestigt werden kann, die Möglichkeit bietet, innerhalb einer Baureihe von V-Brennkraftmaschinen eine Basisversion ohne Ausgleichswelle zu produzieren und nur die z.B. leistungsfähigere Performance-Version durch Hinzufügen des Ausgleichswellengehäuse mit der Getriebeeinheit besser auszustatten.

Der Antrieb der Ausgleichswelle über eine Kette oder einen Zahnriemen bietet dem Vorteil, daß die Lage der Ausgleichswelle "frei" wählbar ist und nicht wie bei Zähnrädern durch den Achsabstand fixiert ist. Der Nachteil der fehlenden Drehrichtungsumkehr wird durch die erfindungsgemäße Getriebeeinheit beseitigt.

Die Lagerung und Abstützung des Ringrades des Planetengetriebes kann über ein Lager am vorderen Ende der gleichswelle erfolgen, wodurch jedoch höhere Relativdrehzahlen an diesem Lager auftreten, sie kann jedoch auch auf einer Ringschulter des Planetenradträgers erfolgen, wodurch das Lager nur mit der Kurbelwellendrehzahl belastet wird.

Die Erfindung wird anhand eines in den Zeichnungen gezeigten Ausführungsbeispieles näher erläutert. Es zeigt:
- Fig. 1: eine Frontalansicht einer V-Brennkraftmaschine mit offenliegend dargestelltem Antrieb der Ausgleichswelle gemäß der Erfindung;
- Fig. 2: einen vertikalen Schnitt durch die Getriebeeinheit zum Antrieb der Ausgleichswelle;
- Fig. 3: eine Ansicht der Getriebeeinheit in Richtung des Pfeiles III in Fig. 2 und
- Fig. 4: einen ähnlichen Schnitt wie Fig. 3 durch eine andere Ausführungsform der Getriebeeinheit mit einer anderen Lagerung des Ringrades.

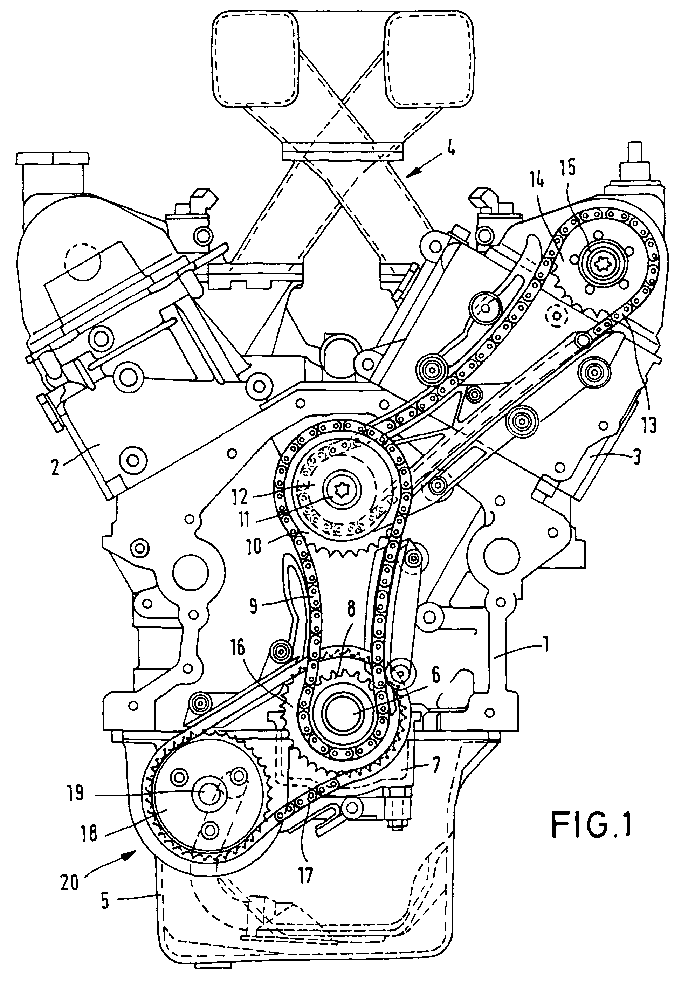

In Fig. 1 ist der Aufbau einer V-Brennkraftmaschine in grundsätzlicher Darstellung aufgezeigt.

An einem Zylinderblock 1 in dem die in V-Anordnung liegenden Zylinder in zwei einen bestimmten Winkel einschliessenden Reihen angeordnet sind, sind zwei Zylinderköpfe 2 und 3, ein Ansaugkrümmer 4 und eine Ölwanne 5 befestigt. Im unteren Bereich des Zylinderblockes 1 ist die Kurbelwelle 6 der Brennkraftmaschine über Lagerdeckel 7 abgestützt aufgenommen und treibt über ein Kettenrad 8 und einen Kettentrieb 9 ein Kettenrad 10 an, das mit einer Zwischenwelle 11 verbunden ist, von der aus über ein Kettenrad 12, einen Kettentrieb 13 und ein Kettenrad 14 die eine oben liegende Nockenwelle 15 der einen Zylinderreihe der Brennkraftmaschine angetrieben wird.

Die Kurbelwelle 6 weist ein weiteres Kettenrad 16 auf, das über einen Kettentrieb 17 ein weiteres Kettenrad 18 mit einer Übersetzung von 1:1 antreibt. Über das Kettenrad 18 wird eine parallel zur Kurbelwelle 6 verlaufende Ausgleichswelle 19 über eine Getriebeeinheit 20 mit doppelter Kurbelwellendrehzahl und gegenläufig angetrieben. Die Ausgleichswelle 19 kann hierbei entweder unmittelbar im Zylinderblock 1 oder aber in einem eigenen Ausgleichswellengehäuse gelagert sein, das mit dem Zylinderblock über Schraubenbolzen verbunden ist.

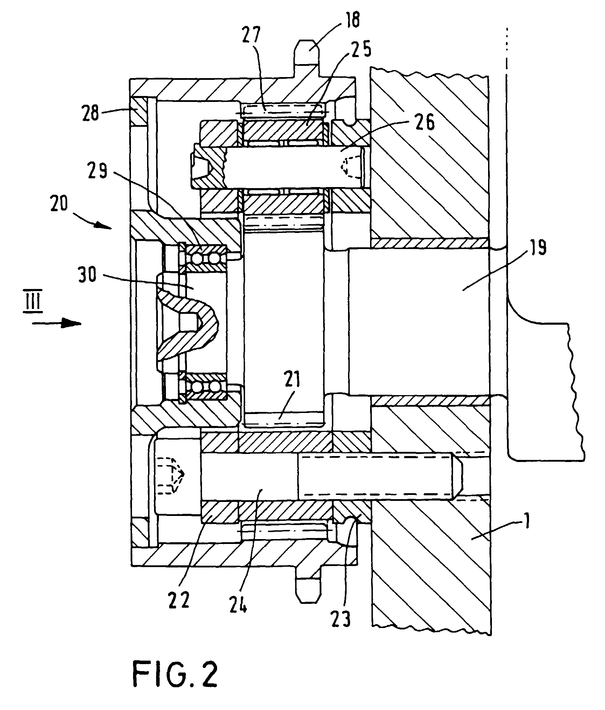

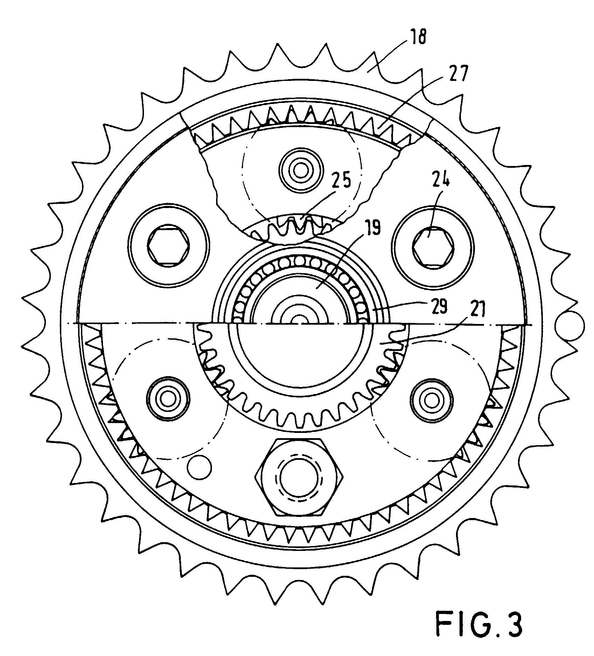

Die Getriebebaueinheit 20 wird in Verbindung mit den Figuren 2 und 3 nachfolgend im einzelnen erläutert.

Die Getriebeeinheit 20 weist die Form eines Planetengetriebes auf und besteht im wesentlichen aus einem Sonnenrad 21, das am vorderen Ende der Ausgleichswelle 19 ausgebildet ist, aus einem aus zwei Teilen 22 und 23 bestehenden Planetenradträger, der über Schraubenbolzen 24 am Zylinderblock 1 festgelegt ist und Planetenräder 25 über entsprechende Nadellager auf Planetenradbolzen 26 drehbar gelagert aufweist und aus einem Ringrad 27, das am inneren Umfang des Kettenradbauteiles 18 ausgebildet ist und das in Eingriff mit den Planetenrädern 25 steht, die wieder ihrerseits in Eingriff mit dem Sonnenrad 21 an der Ausgleichswelle 19 stehen.

Dadurch wird durch die Getriebeeinheit 20 sowohl eine Drehrichtungsumkehr als auch eine Übersetzung der Drehzahl der Ausgleichswelle auf doppelte Kurbelwellendrehzahl erreicht.

Das Kettenradbauteil 18 ist in dieser Ausführungsform mit einem sich radial nach innen erstreckenden Nabenteil 28 versehen, das sich über ein Kugellager 29 an einem Zapfen 30 am vorderen Ende der Ausgleichswelle 19 abstützt.

Selbstverständlich ist es auch möglich, einen Teil der erforderlichen Übersetzung bereits in den Kettentrieb von der Kurbelwelle zum Kettenrad der Ausgleichswelle zu legen, sofern dies entsprechend bei der Auslegung der Übersetzung des Planetengetriebes berücksichtigt wird.

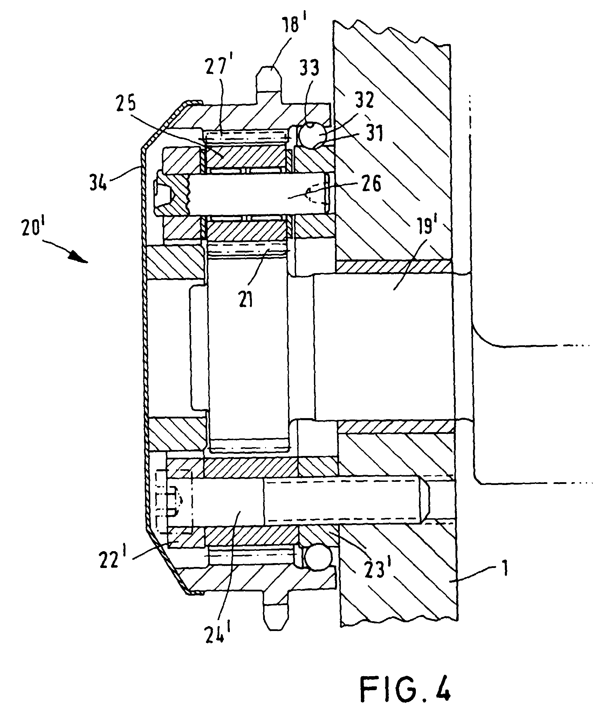

In Fig. 4 ist eine weitere Möglichkeit zur Abstützung und Lagerung des Kettenradbauteiles gezeigt, hierbei werden unveränderte Bauteile mit den gleichen Bezugszeichen, nur gering modifizierte Bauteile mit gleichen Bezugszeichen und einem Strichindex und neue Bauteile mit neuen Bezugszeichen versehen.

Das Kettenradbauteil 18' ist wieder an seinem Innenumfang mit einem Ringrad 27' versehen, das in Eingriff mit den Planetenrädern 25 steht, die auf den Planetenradbolzen 26 des Planetenradträgers 22' und 23' stehen, der über einen modifizierten Schraubenbolzen 24' wieder am Zylinderblock 1 oder am Ausgleichswellengehäuse befestigt ist.

Das Planetenradträgerbauteil 23' ist an seinem Außenumfang mit einer Laufrille 31 für ein Rillenkugellager 32 versehen und eine entsprechende Laufrille 33 ist am Innenumfang des Kettenradbauteiles 18' ausgebildet. Die Befestigung des Planetenradträgers erfolgt in ähnlicher Weise über einen Schraubenbolzen 24' am Zylinderblock 1 und nach erfolgter Montage wird die Getriebebaueinheit 20' durch einen Blechdeckel 34 abgeschlossen, der in einer geeigneten Weise durch Aufklemmen, Umbördeln oder Verstemmen mit dem Außenumfang des Kettenradbauteiles 18' verbunden wird.

## Patentansprüche

1. Antrieb einer Ausgleichswelle an einer V-Brennkraftmaschine, zum Ausgleich der Massenmomente zweiter Ordnung, mit einer parallel zur Kurbelwelle (6) verlaufenden, über einen Ketten- oder Riementrieb mit doppelter Kurbelwellendrehzahl gegenläufig angetriebenen Ausgleichswelle (19),
**dadurch gekennzeichnet,** daß
- die Ausgleichswelle (19) ein Sonnenrad (21) aufweist, das in Eingriff mit zumindest drei auf einem Planetenträger (22/23) angeordneten Planetenrädern (25) steht,
- der Planetenradträger (22/23) am Zylinderblock (1) oder an einem Ausgleichswellengehäuse, das mit dem Zylinderblock verbunden ist, festgelegt ist,
- die Planetenräder (25) in Eingriff mit einem Ringrad (27) stehen, das am Innenumfang eines Ketten- oder Zahnriemenrades (18) ausgebildet ist, das von der Kurbelwelle (6) über einen Ketten- oder Riementrieb (17) mit einer ersten Übersetzung (z.B. von 1:1) angetrieben ist und
- eine zweite Übersetzung, z.B. von 2:1, zwischen dem Ringrad (27) und dem Sonnenrad (21) zu einer Gesamtübersetzung von 2:1 führt.

2. Antrieb einer Ausgleichswelle nach Anspruch 1,
**dadurch gekennzeichnet,** daß
- das Ketten- oder Zahnriemenrad (18) mit einem radial nach innen ragenden Nabenbauteil (28) verbunden ist mittels dem es über ein Kugellager (29) an einem vorderen Zapfen (30) der Ausgleichswelle (19) abgestützt ist.

3. Antrieb einer Ausgleichswelle nach Anspruch 1,
**dadurch gekennzeichnet,** daß
- das Ketten- oder Zahnriemenrad (18') an seinem zylinderblocknahen Ende eine Laufrille (33) aufweist und über ein Rillenkugellager (32) an dem eine entsprechende Laufrille (31) aufweisenden zylinderblocknahen Ende des Planetenradträgerbauteiles (23') drehbar gelagert abgestützt ist.

## Revendications

1. Entraînement d'un arbre d'équilibrage d'un moteur à combustion interne en V destiné à équilibrer les couples d'inertie du deuxième ordre, comprenant un arbre d'équilibrage (19) qui s'étend parallèlement au vilebrequin (6) et qui, par l'intermédiaire d'une transmission à chaîne ou à courroie, est entraîné à une vitesse de rotation double de celle du vilebrequin et en sens inverse, caractérisé par le fait que :
- l'arbre d'équilibrage (19) présente une roue planétaire (21) qui engrène avec au moins trois satellites (25) disposés sur un porte-satellites (22/23),
- le porte-satellites (22/23) est fixé au bloc-cylindres (1) ou à un carter de l'arbre d'équilibrage qui est relié au bloc-cylindres,
- les satellites (25) engrènent avec une couronne dentée (27) qui est formée sur le pourtour intérieur d'une roue à chaîne ou à courroie dentée (18), celle-ci étant entraînée par le vilebrequin (6) par l'intermédiaire d'une transmission à chaîne ou à courroie (17) avec un premier rapport multiplicateur (par exemple égal à 1/1), et :
- une deuxième multiplication, par exemple égale à 2/1, entre la couronne dentée (27) et la roue planétaire (21) conduit à une multiplication totale égale à 2/1.

2. Entraînement d'un arbre d'équilibrage selon la revendication 1, caractérisé par le fait que la roue à chaîne ou à courroie dentée (18) est reliée à une partie formant moyeu (28) qui fait saillie vers l'intérieur dans le sens radial et au moyen de laquelle elle est appuyée sur un tourillon avant (30) de l'arbre d'équilibrage (19) par l'intermédiaire d'un palier à billes (29).

3. Entraînement d'un arbre d'équilibrage selon la revendication 1, caractérisé par le fait que la roue à chaîne ou à courroie dentée (18) présente, à son extrémité qui est la plus proche du bloc-cylindres, une gorge de roulement (33), et qu'elle s'appuie en étant montée tournante par l'intermédiaire d'un palier à billes à gorge (32) sur l'extrémité de l'élément constitutif du porte-satellites (23') qui est la plus proche du bloc-cylindres et qui présente une gorge de roulement correspondante (31).

## Claims

1. A drive of a compensating shaft on a V-type internal combustion engine for compensation of the second order moments of inertia, comprising a compensating shaft (19) extending parallel to the crankshaft (6) and driven via a chain or toothed belt drive in counterrotation thereto at twice the speed of rotation of the crankshaft,
characterised in that
- the compensating shaft (19) is provided with a sun gear (21) which meshes with at least three planet gears (25) fitted on a planet carrier (22/23),
- the planet carrier (22/23) is fixed in position on the cylinder block 1 or on a compensating shaft housing which is connected to the cylinder block,
- the planet gears (25) mesh with a ring gear (27) formed on the inner circumference of a chain or toothed belt sprocket wheel (18) which is driven by the crankshaft (6) via a chain or toothed belt drive with a first gear ratio (e.g. of 1:1) and
- a second gearing-up, e.g. of 2:1, between the ring gear (27) and the sun gear (21) leads to an overall gearing-up of 2:1.

2. A compensating shaft drive according to claim 1,
characterised in that
- the chain or toothed belt sprocket wheel (18) is connected to a radially inwardly projecting hub part (28) by means of which it is supported via a ball bearing (29) on a front journal (30) of the compensating shaft (19).

3. A compensating shaft drive according to claim 1,
characterised in that
- the chain or toothed belt sprocket wheel (18') has a track groove (33) on its end nearest the cylinder block and is supported and rotatably mounted via a deep groove ball bearing (32) on the end of the planet gear carrier member (23') nearest the cylinder block which has a corresponding track groove(31).
